# EUROPEAN PATENT SPECIFICATION

(11) **EP 2 060 517 B1**
(45) Date of publication and mention of the grant of the patent: **16.04.2014**
(21) Application number: 08020111.4
(22) Date of filing: 18.11.2008
(51) Int. Cl.: B65G 69/32

(54) **Dock leveler with a translating lip and with a weather shield**
Hubplattform mit ausfahrbare Verlängerung und mit Wetterschild
Niveleur de quai avec un traverse coulissante et avec une protection météorologique

(30) Priority: 19.11.2007 US 942249
(43) Date of publication of application: 20.05.2009
(73) Proprietor: Rite-Hite Holding Corporation, Milwaukee, Wisconsin 53223 (US)
(72) Inventor: Bettendorf, Andreas, Künzell 36093 (DE); Digmann, Charles, J., Dubuque 52001 (US); Hoffmann, David, J., Peosta 52068 (US); McNeill, Matthew, C., Mequon 53092 (US); Rowlett, Paul D., Grafton, Wisconsin 53024 (US)
(74) Representative: Samson & Partner

(56) References cited:
- EP-A- 1 445 222
- US-A- 4 422 199
- US-A1- 2002 152 562
- US-B1- 7 146 673

## Description

### Field of the Invention

The subject disclosure generally pertains to loading docks and more specifically to a shield system for sheltering an area underneath a dock leveler.

### Background of Related Art

A typical loading dock of a building includes an exterior doorway with an elevated platform for loading and unloading vehicles, such as trucks and trailers. To compensate for height differences between the loading dock platform and an adjacent bed of a truck or trailer, many loading docks have a dock leveler. A typical dock leveler includes a deck or ramp that is pivotally hinged along its back edge to vary the height of its front edge. An extension plate or lip extends outward from the deck's front edge to span the gap between the rear of the truck bed and the front edge of the deck.

The deck and lip are usually moveable between a stored position and an operative position. When in the stored position, the deck may be either vertical or horizontal, depending on the style of dock leveler. In addition, dock levelers may be equipped with a variety of different lips, including fixed (immovable) lips, pivotally-mounted, or rotating, lips, and linearly-moving, or telescopic, lips. Regardless of what style of lip is utilized, the lip, in the operative position, is intended to extend from the deck's front edge and rest upon the truck bed to form a bridge between the two, thereby allowing personnel and material handling equipment to readily move on and off the vehicle during loading and unloading operations.

To help shield against weather while a vehicle is being serviced at the dock, some type of seal is usually installed around the perimeter of the doorway. Such seals are typically installed along the upper and side edges of the doorway to help seal any air gaps that may otherwise exist between the face of the building and the rear of the vehicle. The dock leveler lip resting upon the rear of the vehicle is often relied upon to seal most of the doorway's lower edge.

The area or pit underneath a dock leveler's deck, however, is usually exposed to outside air. This can create problems, particularly when there is a significant temperature differential between the indoor and outdoor air. Warm outside air, for example, may condense underneath a relatively cool deck of a dock leveler used in a cold storage warehouse. The condensation can promote corrosion of various parts of the dock leveler. Conversely, a heated building during the winter may loose a significant amount of heat by thermal conduction through the deck, as cold outside air cools the ramp from underneath. Thus, regardless of whether the outside air is colder or warmer than the inside air, it may be beneficial to shield the underside of a dock leveler from outside air.

Although attempts have previously been made to shield, or seal, the underside of fixed-lip and pivotally-mounted-lip dock leveler from outside air, a need still exists for an under-leveler shield that provides an effective and consistent shield for underneath of a dock leveler with a telescopic lip. Because telescopic lips move linearly relative to the deck, they effectively change the length of the dock leveler and provide a unique set of challenges to those attempting to shield the area below the leveler.

First, the shield must provide an effective environmental barrier regardless of lip position (e.g., retracted or extended). A translating lip can limit the choices for attaching an effective shield.

Second, because a translating lip moves linearly, the upward travel requirement for the dock leveler's deck is considerably less than that for pivotally mounted lips because decks with translating lips do not need to be raised as high for the lip to clear the rear edge of the truck/trailer and subsequently lowered upon the vehicle bed. This means that a different, unique shield may be needed.

Third, the shield must accommodate the movement of a telescopic lip and provide an effective environmental barrier without interfering with the operation of the lip or leveler.

Fourth, some (but not all) translating lips include a series of slits that are open to outdoor air when the lip extends beyond the front edge of the deck. A conventional lip seal terminating near the deck's front edge can fail to close off such slits.

Fifth, dock levelers with translating lips are often associated with a vertically moving door panel that closes in front of the dock leveler by descending upon a lower dividing panel (sometimes known as an ISO panel). The existence of such a door, lower dividing panel, and a liftgate-receiving receptacle thereunder, further complicates the problem of sealing the area underneath dock levelers with a translating lip. Moreover, dock leveler shield system should be easy to install and easily customized to accommodate various parts of the dock leveler assembly.

From US 2002/0152562, a dock leveler is known which discloses typical features of a dock leveler in the field, and most of the features of claims 1, 2 and 4. An extendible shield helps shelter the pit area below a dock leveler of a loading dock. The shield is especially suited for dock levelers having a ramp of pivotally adjustable height with a lip extension for providing a traffic path between the rear of a vehicle and a loading dock platform. The shield includes a curtain wrapped around a roller, which provides the shield with a vertical span that can vary to match the up and down movement of the ramp.

From EP 1 445 222 A1 a shield system with an inflatable area for sealing a pit area of a loading dock with a dock leveler is known. A lower edge of the inflatable shield is mounted to a support bar at a lower edge of a building aperture. An upper edge with the inflatable area of the shield can be pressed against an extension of the dock leveler, when the extension is in an extended position.

US 4,422,199 discloses a flexible seal for use in adjustable dockboard unit for sealing the unit against the flow of air therethrough into and/or out of the building in which the dockboard is being used.

There exists still a need for an under-leveler seal system that overcomes the limitations of current seal systems.

### Summary of the Invention

According to a first aspect, the invention provides a dock leveler in accordance with the subject-matter of independent claim 1. A second aspect of the invention is directed to a dock leveler in accordance with the subject-matter of independent claim 2. According to a third aspect, the invention provides a dock leveler in accordance with the subject-matter of independent claim 4.

Preferred embodiments of the invention are set forth in the dependent claims, the following description and the drawings.

### Brief Description of the Drawings

FIG. 1 is a perspective view of a loading dock and a dock leveler with a weather shield, wherein part of the dock and dock leveler are cutaway.
FIG. 2 is a cross-sectional side view of FIG. 1.
FIG. 3 is a perspective view similar to FIG. 1 but showing the lip of the dock leveler extended.
FIG. 4 is a cross-sectional side view of FIG. 3 and further showing a vehicle at the dock.
FIG. 5 is a perspective view similar to FIG. 1 but showing another embodiment.
FIG. 6 is a cross-sectional side view of FIG. 5
FIG. 7 is a perspective view similar to FIG. 5 but showing the lip of the dock leveler extended.
FIG. 8 is a cross-sectional side view of FIG. 7.
FIG. 9 is a cross-sectional side view similar to FIG. 2 but showing an embodiment of the present invention.
FIG. 10 is a cross-sectional side view similar to FIG. 9 but showing the lip extended and resting upon a vehicle bed.
FIG. 11 is a perspective view similar to FIG. 1 but with an added flexible seal
FIG. 12 is a cross-sectional side view of yet another dock leveler with a weather shield.
FIG. 13 is a cross-sectional side view similar to FIG. 12 but showing the lip of the dock leveler extended.
FIG. 14 is a cross-sectional side view similar to FIG. 13 but showing the shield having responded to the deck descending.
FIG. 15 is a cross-sectional side view similar to FIG. 14 but with a roller added to the upper edge of the shield.
FIG. 16 is a perspective view similar to FIG. 1 but showing an alternate embodiment of a shield.
FIG. 17 is a perspective view similar to FIGS. 1 and 16 but showing yet another embodiment.
FIG. 18 is a cross-sectional side view of another example of seal design, which is not part of the invention.
FIG. 19 is a cross-sectional side view similar to FIG. 18 but showing the lip of the dock leveler retracted.

### Detailed Description of the Drawings

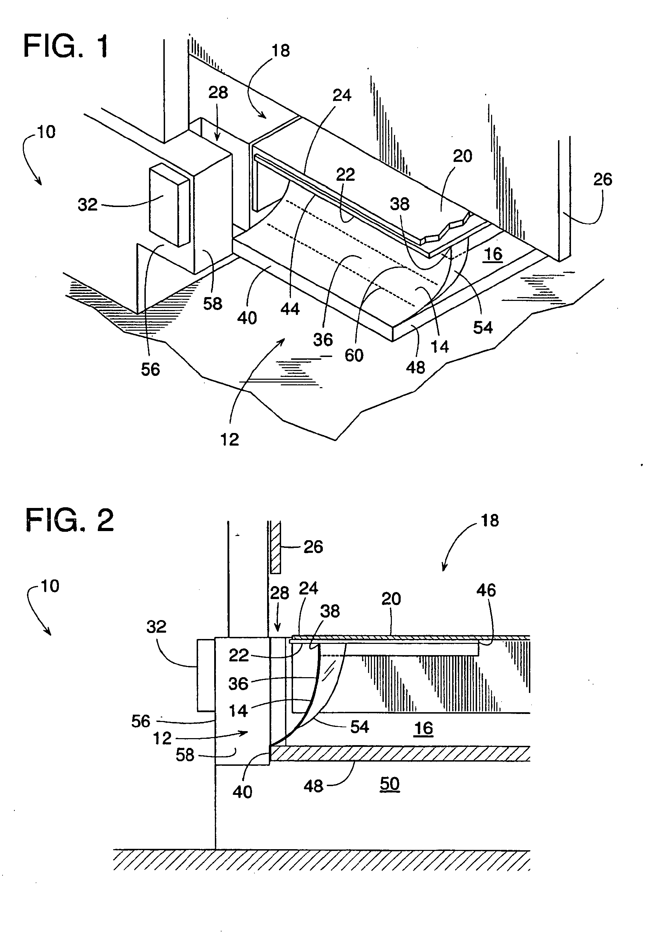

FIGS. 1 - 4 show an example of a loading dock 10 with a shield system 12 that, in this particular example, includes a shield 14 in the form of a flexible curtain that shields a pit area 16 underneath a dock leveler 18. By blocking out weather and other elements, shield 14 helps protect pit area 16 and helps reduce energy losses and the condensation problems associated with indoor/outdoor temperature differentials.

The use of a flexible curtain, rather than a thicker, more rigid structure, enables shield system 12 to be readily adapted to fit a wide variety of dock levelers and pits. For example, a curtain can be custom cut to size at the installation site, and various cutouts can be made so that the curtain does not interfere with the operation of the dock leveler. Such trimming is not readily accomplished with thicker foam seals, especially if they are encased within a fabric covering. Moreover, a thick foam seal takes up more space underneath a dock leveler than does a relatively thin curtain. Although a curtain-style shield is readily applied to a wide variety of dock levelers, shield 14 is particularly suited for dock levers that have a telescoping or translating lip. Because a flexible curtain is so versatile, shield system 12 can be applied to a wide variety of dock levelers.

Dock leveler 18, for example, comprises a vertically adjustable deck 20 and a telescopic lip 22 that can translate linearly relative to deck 20. The vertical movement of deck 20 can be by virtue of deck 20 pivoting about its rear edge to raise or lower a front edge 24 of the deck, or deck 20 could be supported by a mechanism that moves deck 20 up and down in a linear manner. Both modes of operation are well known to those of ordinary skill in the art. Examples of dock leveler 18 (without shield system 12) are explained in more detail in U.S. Patents 4,455,703 and 4,662,021, which are specifically incorporated by reference herein.

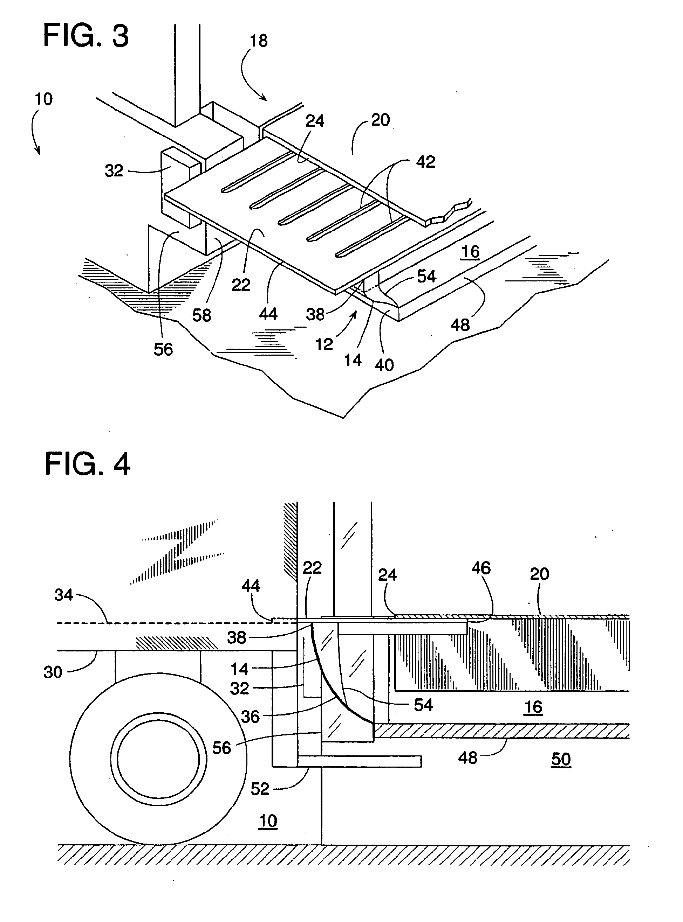

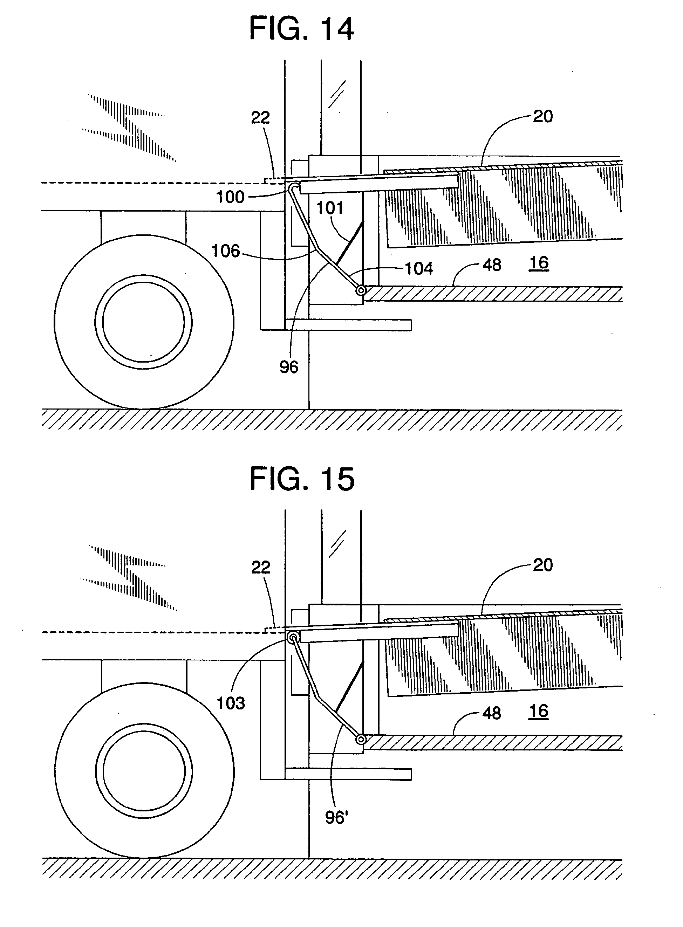

The operating sequence of dock leveler 18 and shield system 12 may begin with deck 20 in its stored, cross-traffic position, as shown in FIGS. 1 and 2. In this position, telescopic lip 22 will typically be in a retracted, or stored position, in which it extends little if any beyond the deck's front edge 24. With lip 22 retracted, a door panel 26 can be at a raised, open position, or panel 26 can be lowered into a door-receiving slot 28 of dock 10 to close the door (FIG. 14). With dock leveler 18 in its stored position, a vehicle 30, such as a truck, trailer, or the like, can back into dock 10 until the rear end of vehicle 30 engages or is adjacent to a set of bumpers 32, as shown in FIG. 4. At this point, the elevation of the deck's front edge 24 is adjusted to allow lip 22 to extend out and over a truck or trailer bed 34 of vehicle 30. Once lip 22 is extended, deck 20 can descend until lip 22 rests upon bed 34.

To help shield pit area 16, a front panel 36 of shield 14 has an upper edge 38 attached to lip 22 and a lower edge 40 anchored at some convenient location. To inhibit air from blowing through a series of slits 42 that might exist in lip 22, upper edge 38 of shield 14 is preferably attached to lip 22 somewhere between a distal edge 44 of lip 22 and where the series of slits 42 begin. For lips without slits, the point where upper edge 38 attaches to lip 22 is less critical. Upper edge 38 of shield 12 is spaced at least some distance from distal edge 44 to allow lip 22 to rest solidly upon bed 34.

As for lower edge 40 of shield 14, in some cases, lower edge 40 is attached to a lower panel 48 (sometimes known as an ISO panel) that provides an insulated divider in pit 16, just above a liftgate-receiving receptacle 50. Receptacle 50 provides clearance for vehicles that have a rear liftgate 52. The insulating properties of panel 48 help isolate dock leveler 18 from receptacle 50.

To help seal off side areas underneath lip 22, shield 14 may comprise two side panels 54 extending from front panel 36. Side panels 54 extend on each side of lip 22 to provide additional sealing when lip 22 projects beyond a front face 56 of dock 10. When lip 22 extends beyond front face 56 of dock 10, lip 22 extends beyond the pit walls that inherently provide an environmental barrier. As such, a need exists for an environmental barrier below lip 22 when the lip extends beyond the pit walls. Side panels 54 help meet that need by moving with lip 22, even when lip 22 extends beyond front face 56, thereby bridging the air gap that would otherwise exist in front of dock face 56 (see FIG. 4). As shown, side panels 54 lie generally perpendicular to front panel 36 and at times slidingly seal against bumper 32 and/or a side wall 58 of pit 16.

Shield 14, including front panel 36 and side panels 54, can be made of any pliable or semi-flexible material including, but not limited to, nylon, canvas, HYPALON (Dupont trademark), canvas duck, rubber impregnated fabric, foam, etc. Shield system 12 may also include one or more generally horizontal rods 60 attached to front panel 36 to help ensure that shield 36 hangs uniformly and extends nearly or completely across the entire width of pit 16 for adequate sealing. Rods 60 may be made of steel, plastic, or a different material that is heavier and more rigid than shield 14 and may be sewn or otherwise attached to shield 14.

Attaching upper edge 38 of shield 14 to telescopic lip 22 helps ensure an adequate seal regardless of lip position, but it also presents unique challenges that are not encountered with fixed or rotating lip levelers because shield 14 moves as the lip 22 extends and retracts. Thus, when lip 22 is in the extended position shown in FIGS. 3 and 4, shield 14 is in a different position than shown in FIGS. 1 and 2. When lip 22 is in an extended position, upper edge 38 of shield 14 is now laterally spaced from front edge 24 of deck 20. Even in this new position, the weight and rigidity of rods 60 help keep shield front panel 36 taut and spanning the width of pit area 16.

When dock leveler 18 is in the position of FIGS. 3 and 4, a vehicle at the loading dock can be loaded or unloaded of its cargo, while shield 14 provides an effective barrier to help keep pit area 16 clean and dry.

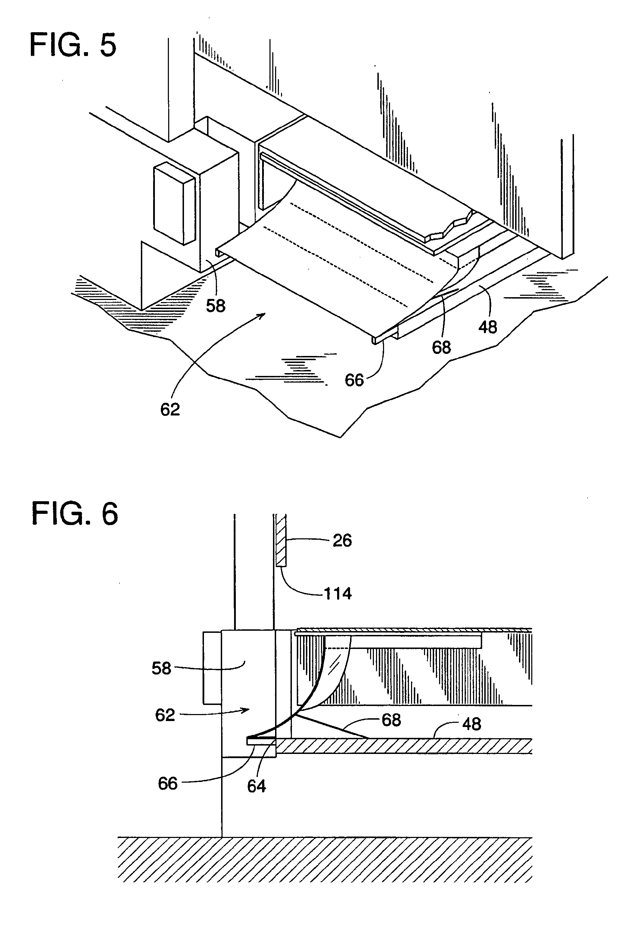

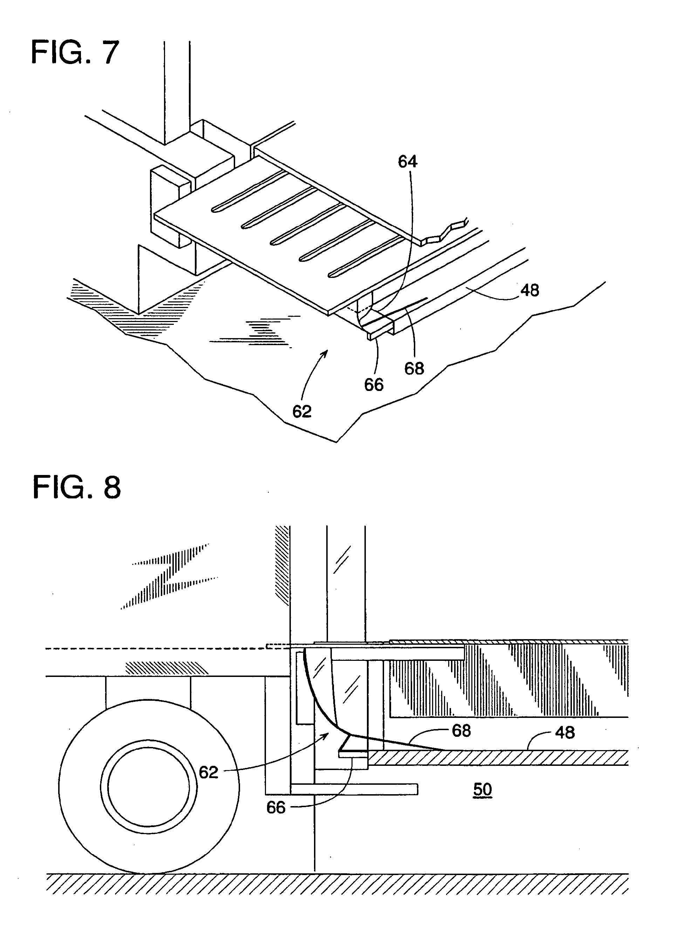

FIG. 5 - 8, which correspond to FIG. 1 - 4 respectively, illustrate a shield 62 similar to shield 14 but with certain modifications. In addition to attaching a lower edge 64 of shield 62 to lower panel 48, a lower portion of shield 62 is attached to pit side wall 58 via an extended mounting bracket 66. Also, a flexible, resilient strap or cord 68 extending between shield 62 and lower panel 48 can help keep shield 62 taut. Cord 68 and bracket 66 can help make the movement of shield 62 smoother and more predictable and ultimately improve the seal.

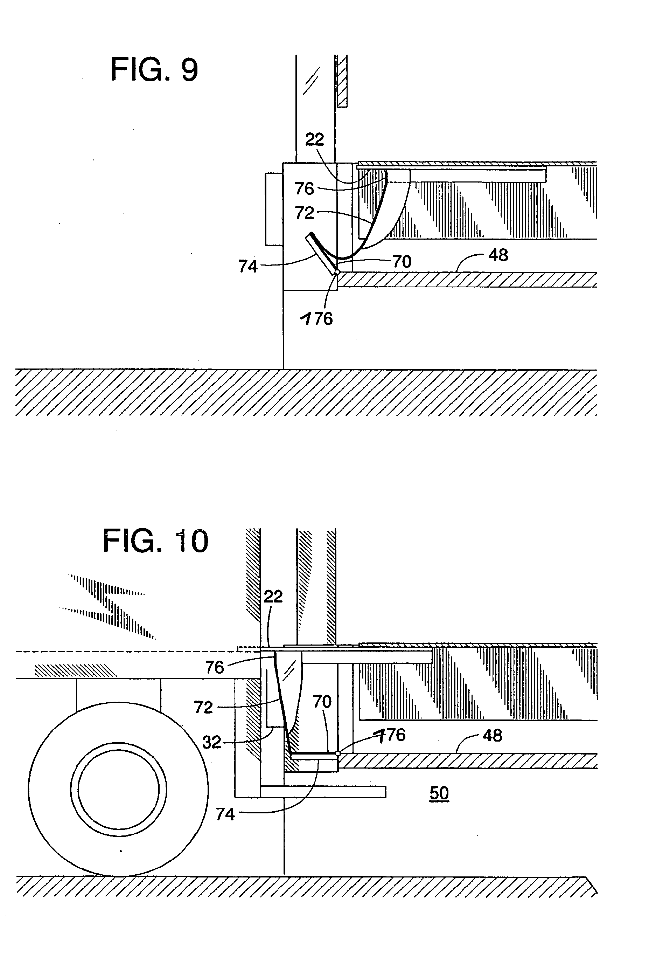

FIGS. 9 and 10 show an embodiment of the present invention. In this case, a lower edge 70 of a shield 72 is attached to lower panel 48, and a lower portion of shield 72 is attached to a pivot arm 74 that can rotate about a point 176. When lip 22 extends, arm 74 will rotate about pivot point 176 to a substantially horizontal position, as shown in FIG. 10. On the other hand, when lip 22 retracts, an upper edge 76 of shield 72 will move with lip 22, thereby pulling on arm 74 and causing arm 74 to rotate upward, as shown in FIG. 9. The use of pivot arm 74 may subject shield 72 to less stress and strain than if the lower portion of shield 72 were more solidly attached to panel 48 and may provide for smoother, more consistent movement of shield 72. Additionally, the weight of pivot arm 74 may be sufficient to keep shield 72 taut and eliminate the need for stiffening rods 60.

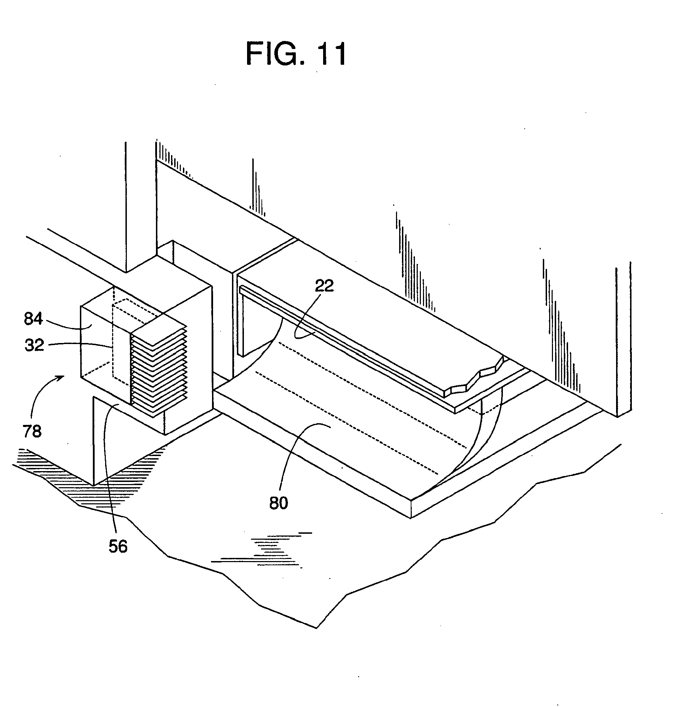

FIG. 11 illustrates a flexible seal 78 that may be used in conjunction with a shield 80 to help seal a gap that may otherwise exist between lip 22 and bumper 32 or between shield 80 and bumper 32. Flexible seal 78 may include a series of flexible extensions 82 (e.g., brush bristles, sheet segments, etc.) projecting into the travel path of shield 80 when lip 22 extends. The interaction of seal 78 with shield 80 helps provide an environmental barrier when lip 22 is in an extended position. It may be beneficial to couple flexible seal 78 to bumper 32 or to front face 56 of the loading dock via a compressible, resilient seal member 84. In addition to providing a means for mounting flexible seal 78, seal member 84 may also help seal a gap that may exist between the rear edge of vehicle 30 and bumper 32. In this manner, shield 80, flexible seal 78, and seal member 84 work together to help shield or seal the area underneath and adjacent a dock leveler with a telescopic lip.

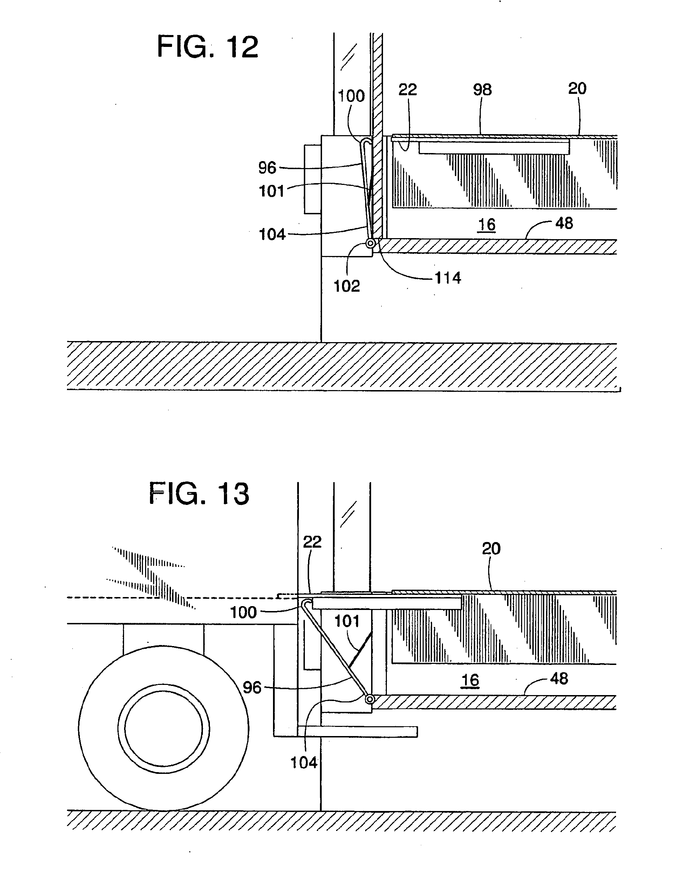

FIG. 12 - 14 show another embodiment of the present invention wherein a rigid or semi-rigid shield 96 can be used instead of a curtain for sheltering pit area 16 underneath a dock leveler 98 that includes translating lip 22. In this case, a shield 96 is pivotally or rotationally mounted to lower panel 48, and preferably some means is used to urge an upper edge 100 of shield 96 against lip 22. In some cases, for example, a torsion spring, tensile spring, compression spring, leaf spring, elastic cord (e.g., item 101), counterweight or any other suitable biasing element can be used to bias upper edge 100 against lip 22. Rather than being fastened to deck 20 or lip 22, shield 96 is designed to accommodate the deck and lip movement (e.g., by being biased in a rearward direction).

The pivotal mounting of shield 96 can be by way of a hinge 102 or by virtue of the shield's resilient flexibility. The design of shield 96 can be such that the flexing or pivoting action can be set to occur at a lower edge 104 of shield 96, although such flexure or pivoting occurring at other locations along the height of shield 96 is possible. The flexing or pivoting motion not only allows lip 22 to extend and retract but also accommodates vertical movement of deck 20. FIG. 14, for example, shows shield 96 having resiliently yielded to downward movement of deck 20. To smoothen the motion of shield 96, it is well within the scope of the invention to add a roller 103 to an upper edge of a shield 96', as shown in Figure 15. It will be noted in the embodiments of FIGS. 14 and 15 that the shields 96 and 96' includes a bend in the middle of its vertical extent. Such a bend, or even bends, can be beneficial in allowing the shields 96 and 96' to seal against the leveler for a larger range of vertical movement of the leveler while not extending too high above the level of the leveler deck in the stored position. It will be appreciated that other geometrical arrangements may be desirable to meet specific application requirements.

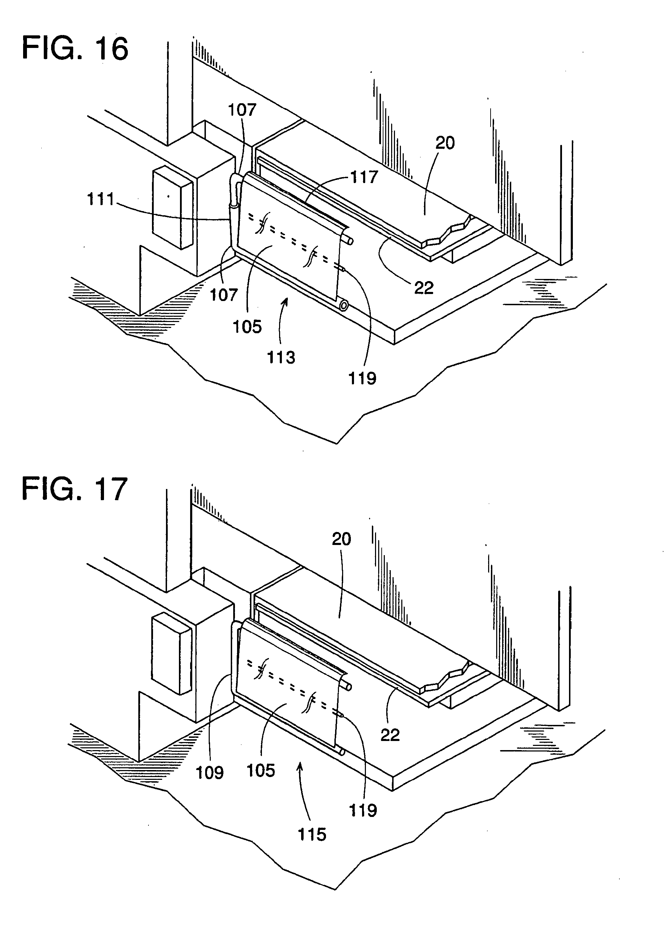

FIGS. 12 - 16 show shields 96 and 96' as each being a generally unitary panel of resiliently flexible material. According to still another embodiment of the present invention, FIGS. 16 and 17, however, show how a shield 113 or 115 can be made by having a frame support a pliable sheet 105. In FIG. 16, sheet 105 is supported by a frame 107 that is vertically telescopic to accommodate both the vertical movement of deck 20 and the horizontal movement of lip 22. A compression spring disposed within a vertical tube 111 of frame 107 urges upper and lower portions of frame 107 apart so that an upper edge 117 of shield 113 is pressed up against lip 22 when the lip is extended.

As an alternative to the spring loaded telescopic frame 107 of FIG. 16, FIG. 17 shows a frame 109 that is rigid or preferably resiliently flexible to accommodate the movement of deck 20 and lip 22. Use of a member such as 101 as discussed relative to FIGS. 12-14 could also be provided to further bias this structure rearwardly, yet also allow forward movement as the leveler descends. It should be noted that the upper edge height of shields 96, 96', 113 and 115 can be as shown or can be even higher to accommodate greater upward movement of deck 20. Either design of FIGS. 16 and 17 can include an optional stiffener 119 that helps maintain the shape of sheet 105.

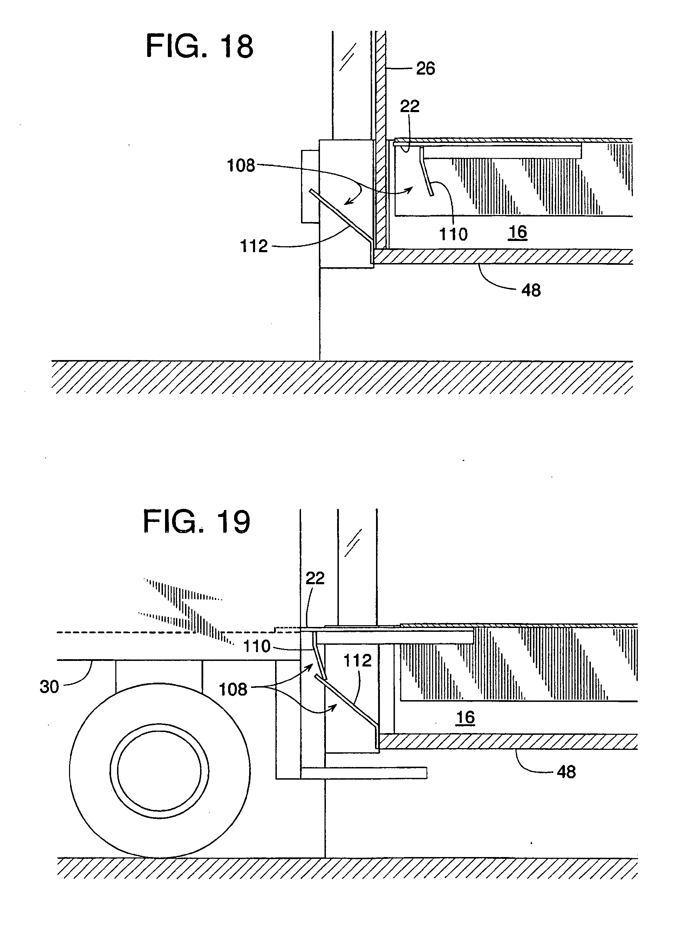

FIGS. 18 and 19 show an example of a dock leveler equipped with a two-piece shield 108. In this case, shield 108 includes an upper shield 110 attached to lip 22 and a lower shield 112 attached to lower panel 48. When lip 22 is retracted and door panel 26 is closed, as shown in FIG. 17, shields 110 and 112 are spaced apart, and door panel 26 with its leading edge 114 resting upon lower panel 48 shelters pit area 16. When lip 22 is extended and engaging vehicle 30, shields 110 and 112 come together to effectively shield pit area 16. Shields 110 or 112 can be made of any suitable rigid or flexible material including, but not limited to, sheet metal, plastic, or fabric.

At least some of the aforementioned embodiments include one or more features and/or benefits including, but not limited to, the following:

In some embodiments, a dock leveler with a translating lip includes a weather shield with an upper edge that moves with the translation of the lip.

In some embodiments, a dock leveler with a translating lip includes a shield that extends from the lip to a lower dividing panel that is underneath the dock leveler's deck. The dividing panel helps isolate the deck from a liftgate-receiving receptacle that's in a pit area below the dock leveler.

In some embodiments, a dock leveler with a translating lip includes a shield comprising a front panel interposed between two side panels, whereby effective sealing can still occur even if the lip extends beyond a front face of the loading dock.

In some embodiments, a weather shield helps obstruct airflow through a series of slits in a translating lip of a dock leveler.

In some embodiments, a weather shield helps protect a dock leveler that is associated with a lower dividing panel (e.g., an ISO panel) and a vertically moving door that closes down against the panel (or against the shield overlaying the dividing panel).

In some embodiments, a conventional dock leveler with a translating lip is retrofitted with an appropriate weather shield.

In some embodiments, a dock leveler with a translating lip includes a weather shield that is designed such that the shield can be flexible or rigid, and the shield can be made of various materials including, but not limited to, sheet metal, plastic or fabric.

In some embodiments, a weather shield works in conjunction with a flexible seal to help block off air that might otherwise flow between a dock bumper and a translating lip of a dock leveler.

Although the invention is described with respect to a preferred embodiment, modifications thereto will be apparent to those of ordinary skill in the art. The scope of the invention, therefore, is to be determined by reference to the following claims:

## Claims

1. A dock leveler disposed within a dock pit (16), the dock leveler (18) comprising:
a deck (20) with a front end (24) that is vertically adjustable between a raised position and a lowered position, and a lip (22) extending from the front end (24) of the deck (20) and being translatable in a forward direction from a retracted position to an extended position relative to the front end (24) of the deck (20), and
a weather barrier,
wherein the weather barrier comprises:
a shield (72) comprising a lower edge (70) and an upper edge (76), and the shield (72) being disposed below the deck (20),
wherein a lower edge (70) of the shield (72) is attached to a lower panel (48), and
a lower portion of the shield (72) is attached to a pivot arm (74) mounted to the dock pit (16) wherein the pivot arm (74) can rotate about a rotation axis (176), and wherein the shield (72) is biased in a rearward direction opposite the forward direction such that the upper edge of the shield (72) moves with the translation of the lip (22) and engages an underside of the lip (22) with the lip (22) in the extended position, and that the pivot arm (74) rotates about the rotation axis (176) towards the forward direction while the shield (72) maintains contact at its upper edge (76) with the lip (22) as the dock leveler (18) descends.

2. A dock leveler disposed within a dock pit (16), the dock leveler (18) comprising:
a deck (20) with a front end (24) that is vertically adjustable between a raised position 1a lowered position, and a lip (22) extending from the front end (24) of the deck (20) and ng translatable in a forward direction from a retracted position to an extended position relative to the front end (24) of the deck (20), and
a weather barrier,
wherein the weather barrier comprises:
a shield (113, 115) comprising a lower edge and an upper edge (117), and the shield 3, 115) being disposed below the deck (20),
and wherein
the shield (113, 115) is rotationally mounted at its lower edge to the dock pit (16) and is adapted to rotate about a rotation axis, and wherein the shield (113, 115) is biased in a rearward direction opposite the forward direction such that the upper edge of the shield moves with the translation of the lip (22) and engages an underside of the lip (22) with the lip (22) in the extended position, and that the shield (113, 115) rotates about the rotation axis towards the forward direction while maintaining contact at its upper edge with the lip (22) as the dock leveler (18) descends, and wherein the shield (113, 115) comprises a pliable sheet supported by a frame (107, 109) that is vertically telescopic to accommodate both the vertical movement of the deck (20) and the horizontal movement of the lip (22).

3. The dock leveler of claim 2, wherein a compression spring is disposed within a vertical tube of the frame (107) that urges upper and lower portions of the frame (107) apart so that the upper edge (117) of the shield (113) is pressed up against the lip (22) when the lip (22) is extended.

4. A dock leveler disposed within a dock pit (16), the dock leveler (18, 98) comprising:
a deck (20) with a front end (24) that is vertically adjustable between a raised position and a lowered position, and a lip (22) extending from the front end (24) of the deck (20) and being translatable in a forward direction from a retracted position to an extended position relative to the front end (24) of the deck (20), and
a weather barrier,
wherein the weather barrier comprises:
a shield (96, 96') comprising a lower edge (104) and an upper edge (100), and the shield (96, 96') being disposed below the deck (20),
wherein
the shield (96, 96') is rigid and is rotationally mounted at its lower edge (104) to the dock pit (16) and is adapted to rotate about a rotation axis, and wherein the shield (96, 96') is biased in a rearward direction opposite the forward direction through a biasing element (101) operatively connected to the shield (96, 96') to bias it in the rearward direction urging the upper edge (100) of the shield (96, 96') against the lip (22) such that the upper edge (100) of the shield (96, 96') moves with the translation of the lip (22), and that the shield (96, 96') rotates about the rotation axis towards the forward direction while maintaining contact at its upper edge (38, 76, 100) with the lip (22) as the dock leveler (98) descends.

5. The dock leveler of claim 4, wherein the shield (96') includes a bend about an intermediate axis between the upper edge (100) and the lower edge (104).

6. The dock leveler of claim 4 or 5, wherein a roller (103) is mounted to the upper edge of the shield (96') and is in contact with lip (22).

## Patentansprüche

1. Überladebrücke, die in einer Rampenvertiefung (16) angeordnet ist, wobei die Überladebrücke (18) umfasst:
eine Plattform (20) mit einer Vorderseite (24), die vertikal zwischen einer gehobenen Position und einer gesenkten Position einstellbar ist, und einer Randplatte (22), die sich von der Vorderseite (24) der Plattform (20) erstreckt und in einer Vorwärtsrichtung von einer zurückgezogenen Position zu einer ausgestreckten Position bezüglich der Vorderseite (24) der Plattform (20) verschiebbar ist, und
eine Wettersperre,
wobei die Wettersperre umfasst:
eine Abschirmung (72), die eine untere Kante (70) und eine obere Kante (76) umfasst, und wobei die Abschirmung (72) unter der Plattform (20) angeordnet ist,
wobei eine untere Kante (70) der Abschirmung (72) an einer unteren Platte (48) befestigt ist, und
ein unterer Teil der Abschirmung (72) an einem Schwenkarm (74) befestigt ist, der an der Rampenvertiefung (16) angebracht ist, wobei der Schwenkarm (74) um eine Drehachse (176) drehen kann, und wobei die Abschirmung (72) in einer Rückwärtsrichtung entgegengesetzt zu der Vorwärtsrichtung vorgespannt ist, so dass die obere Kante der Abschirmung (72) sich mit der Verschiebung der Randplatte (22) bewegt und eine Unterseite der Randplatte (22) mit der Randplatte (22) in der ausgestreckten Position erfasst, und der Schwenkarm (74) um die Drehachse (176) zu der Vorwärtsrichtung dreht, während die Abschirmung (72) Kontakt an ihrer oberen Kante (76) mit der Randplatte (22) beibehält, während sich die Überladebrücke (18) senkt.

2. Überladebrücke, die in einer Rampenvertiefung (16) angeordnet ist, wobei die Überladebrücke (18) umfasst:
eine Plattform (20) mit einer Vorderseite (24), die vertikal zwischen einer gehobenen Position und einer gesenkten Position einstellbar ist, und einer Randplatte (22), die sich von der Vorderseite (24) der Plattform (20) erstreckt und in einer Vorwärtsrichtung von einer zurückgezogenen Position in eine ausgestreckte Position bezüglich der Vorderseite (24) der Plattform (20) verschiebbar ist, und
eine Wettersperre,
wobei die Wettersperre umfasst:
eine Abschirmung (113, 115), die eine untere Kante und eine obere Kante (117) umfasst, und wobei die Abschirmung (113, 115) unter der Plattform (20) angeordnet ist,
und wobei
die Abschirmung (113, 115) drehend an ihrer unteren Kante an der Rampenvertiefung (16) angebracht ist und ausgestaltet ist, um eine Drehachse zu drehen, und wobei die Abschirmung (113, 115) in einer Rückwärtsrichtung entgegengesetzt zu der Vorwärtsrichtung vorgespannt ist, so dass die obere Kante der Abschirmung sich mit der Verschiebung der Randplatte (22) bewegt und eine Unterseite der Randplatte (22) mit der Randplatte (22) in der ausgestreckten Position erfasst, und die Abschirmung (113, 115) um die Drehachse zu der Vorwärtsrichtung dreht, während sie Kontakt an ihrer oberen Kante mit der Randplatte (22) beibehält, während die Überladebrücke (18) sinkt, und wobei die Abschirmung (113, 115) ein biegsames Blatt umfasst, das durch einen Rahmen (107, 109) gestützt ist, der vertikal teleskopierend ist, so dass er sowohl die vertikale Bewegung der Plattform (20) als auch die horizontale Bewegung der Randplatte (22) aufnimmt.

3. Überladebrücke nach Anspruch 2, bei welcher eine Kompressionsfeder in einem vertikalen Rohr des Rahmens (107) angeordnet ist, die einen oberen und einen unteren Teil des Rahmens (107) voneinander weg drückt, so dass die obere Kante (117) der Abschirmung (113) nach oben gegen die Randplatte (22) gedrückt wird, wenn die Randplatte (22) ausgestreckt ist.

4. Überladebrücke, die in einer Rampenvertiefung (16) angeordnet ist, wobei die Überladebrücke (18, 98) umfasst:
eine Plattform (20), mit einer Vorderseite (24), die vertikal zwischen einer gehobenen Position und einer gesenkten Position einstellbar ist, und eine Randplatte (22), die sich von der Vorderseite (24) der Plattform (20) erstreckt und in einer Vorwärtsrichtung von einer zurückgezogenen Position in eine ausgestreckte Position bezüglich der Vorderseite (24) der Plattform (20) verschiebbar ist, und
eine Wettersperre,
wobei die Wettersperre umfasst:
eine Abschirmung (96, 96'), die eine untere Kante (104) und eine obere Kante (100) umfasst, und wobei die Abschirmung (96, 96') unter der Plattform (20) angeordnet ist,
wobei die Abschirmung (96, 96') fest ist und drehend an ihrer unteren Kante (104) an der Rampenvertiefung (16) angebracht ist und ausgestaltet ist, um eine Drehachse zu drehen, und wobei die Abschirmung (96, 96') in einer Rückwärtsrichtung entgegengesetzt zu der Vorwärtsrichtung durch ein Vorspannelement (101) vorgespannt ist, das in Betrieb mit der Abschirmung (96, 96') verbunden ist, um sie in der Rückwärtsrichtung vorzuspannen, wobei die obere Kante (100) der Abschirmung (96, 96') gegen die Randplatte (22) gedrückt wird, so dass die obere Kante (100) der Abschirmung (96, 96') sich mit der Verschiebung der Randplatte (22) bewegt, und wobei die Abschirmung (96, 96') um die Drehachse zu der Vorwärtsrichtung dreht, während sie an ihrer oberen Kante (38, 76, 100) Kontakt mit der Randplatte (22) behält, während die Überladebrücke (98) sinkt.

5. Überladebrücke nach Anspruch 4, bei welcher die Abschirmung (96') eine Krümmung um eine Zwischenachse zwischen der oberen Kante (100) und der unteren Kante (104) umfasst.

6. Überladebrücke nach einem der Ansprüche 4 oder 5, bei welcher eine Rolle (103) an der oberen Kante der Abschirmung (96') angebracht ist und in Kontakt mit der Randplatte (22) ist.

## Revendications

1. Niveleur de quai disposé à l'intérieur d'une fosse de quai (16), le niveleur de quai (18) comprenant :
un pont (20) avec une extrémité avant (24) qui est réglable verticalement entre une position élevée et une position abaissée, et une lèvre (22) s'étendant à partir de l'extrémité avant (24) du pont (20) et pouvant effectuer une translation dans une direction avant d'une position rétractée à une position étendue par rapport à l'extrémité avant (24) du pont (20), et
une barrière anti-intempéries,
dans lequel la barrière anti-intempéries comprend :
un écran de protection (72) comprenant un bord inférieur (70) et un bord supérieur (76), et l'écran de protection (72) étant disposé sous le pont (20),
dans lequel un bord inférieur (70) de l'écran de protection (72) est fixé à un panneau inférieur (48), et
une partie inférieure de l'écran de protection (72) est fixée à un bras de pivotement (74) monté sur la fosse de quai (16), dans lequel le bras de pivotement (74) peut tourner autour d'un axe de rotation (176), et dans lequel l'écran de protection (72) est sollicité dans une direction arrière opposée à la direction avant de sorte que le bord supérieur de l'écran de protection (72) se déplace avec la translation de la lèvre (22) et entre en prise avec un côté inférieur de la lèvre (22) avec la lèvre (22) dans la position étendue, et que le bras de pivotement (74) tourne autour de l'axe de rotation (176) vers la direction avant alors que l'écran de protection (72) maintient un contact à son bord supérieur (76) avec la lèvre (22) lorsque le niveleur de quai (18) descend.

2. Niveleur de quai disposé à l'intérieur d'une fosse de quai (16), le niveleur de quai (18) comprenant :
un pont (20) avec une extrémité avant (24) qui est verticalement réglable entre une position élevée et une position abaissée, et une lèvre (22) s'étendant à partir de l'extrémité avant (24) du pont (20) et pouvant effectuer une translation dans une direction avant d'une position rétractée à une position étendue par rapport à l'extrémité avant (24) du pont (20), et
une barrière anti-intempéries,
dans lequel la barrière anti-intempéries comprend :
un écran de protection (113, 115) comprenant un bord inférieur et un bord supérieur (117), et l'écran de protection (113, 115) étant disposé sous le pont (20),
et dans lequel
l'écran de protection (113, 115) est monté de façon rotative à son bord inférieur sur la fosse de quai (16) et est adapté pour tourner autour d'un axe de rotation, et dans lequel l'écran de protection (113, 115) est sollicité dans une direction arrière opposée à la direction avant de sorte que le bord supérieur de l'écran de protection se déplace avec la translation de la lèvre (22) et entre en prise avec un côté inférieur de la lèvre (22) avec la lèvre (22) dans la position étendue, et que l'écran de protection (113, 115) tourne autour de l'axe de rotation vers la direction avant tout en maintenant un contact à son bord supérieur avec la lèvre (22) lorsque le niveleur de quai (18) descend, et dans lequel l'écran de protection (113, 115) comprend une feuille souple supportée par un cadre (107, 109) qui est verticalement télescopique pour permettre à la fois le mouvement horizontal du pont (20) et le mouvement de translation de la lèvre (22).

3. Niveleur de quai selon la revendication 2, dans lequel un ressort de compression est disposé à l'intérieur d'un tube vertical du cadre (107) qui pousse les parties supérieure et inférieure du cadre (107) pour les éloigner pour que le bord supérieur (117) de l'écran de protection (113) soit comprimé contre la lèvre (22) lorsque la lèvre (22) est étendue.

4. Niveleur de quai disposé à l'intérieur d'une fosse de quai (16), le niveleur de quai (18, 98) comprenant :
un pont (20) avec une extrémité avant (24) qui est verticalement réglable entre une position élevée et une position abaissée, et une lèvre (22) s'étendant à partir de l'extrémité avant (24) du pont (20) et pouvant effectuer une translation dans une direction avant d'une position rétractée à une position étendue par rapport à l'extrémité avant (24) du pont (20), et
une barrière anti-intempéries,
dans lequel la barrière anti-intempéries comprend :
un écran de protection (96, 96') comprenant un bord inférieur (104) et un bord supérieur (100), et l'écran de protection (96, 96') étant disposé sous le pont (20),
dans lequel
l'écran de protection (96, 96') est rigide et est monté de façon rotative à son bord inférieur (104) sur la fosse de quai (16) et est adapté pour tourner autour d'un axe de rotation, et dans lequel l'écran de protection (96, 96') est sollicité dans une direction arrière opposée à la direction avant par l'intermédiaire d'un élément de sollicitation (101) raccordé fonctionnellement à l'écran de protection (96, 96') pour le solliciter dans la direction arrière, poussant le bord supérieur (100) de l'écran de protection (96, 96') contre la lèvre (22) de sorte que le bord supérieur (100) de l'écran de protection (96, 96') se déplace avec la translation de la lèvre (22), et que l'écran de protection (96, 96') tourne autour de l'axe de rotation vers la direction avant tout en maintenant un contact à son bord supérieur (38, 76, 100) avec la lèvre (22) lorsque le niveleur de quai (98) descend.

5. Niveleur de quai selon la revendication 4, dans lequel l'écran de protection (96') comprend un coude autour d'un axe intermédiaire entre le bord supérieur (100) et le bord inférieur (104).

6. Niveleur de quai selon la revendication 4 ou 5, dans lequel un rouleau (103) est monté sur le bord supérieur de l'écran de protection (96') et est en contact avec la lèvre (22).
